# FASCICULE DE BREVET EUROPEEN

(11) **EP 1 110 826 B1**
(45) Date de publication et mention de la délivrance du brevet: **10.03.2004**
(21) Numéro de dépôt: 00403534.1
(22) Date de dépôt: 15.12.2000
(51) Int. Cl.: B60R 21/26

(54) **Dispositif de sécurité pyrotechnique pour véhicule**
Pyrotechnische Sicherheitsvorrichtung für ein Kraftfahrzeug
Pyrotechnic safety device for a vehicle

(30) Priorité: 23.12.1999 FR 9916327
(43) Date de publication de la demande: 27.06.2001
(73) Titulaire: GIAT INDUSTRIES, 78000 Versailles (FR)
(72) Inventeur: Vidot, Jean-Paul, 65320 Borderes sur l'Echez (FR); Chemiere, Patrice, 65350 Laslades (FR)
(74) Mandataire: Célanie, Christian

(56) Documents cités:
- DE-C- 19 702 259
- FR-A- 2 691 706
- US-A- 5 602 361
- US-A- 5 970 880

## Description

Le domaine technique de l'invention est celui des dispositifs de sécurité pyrotechniques pour véhicule.

Ces dispositifs comprennent généralement au moins un initiateur pyrotechnique qui est relié à au moins un générateur de gaz, voir par example DE-C-19702259.

On connaît ainsi des dispositifs permettant d'assurer le gonflage de coussins de sécurité («airbags») frontaux ou latéraux. On connaît également des dispositifs provoquant le prétensionnement des ceintures de sécurité, ou encore des dispositifs provoquant l'effacement des pédales de frein, le blocage des sièges, la rétraction de la colonne de direction, le déploiement d'arceaux de sécurité (pour les cabriolets) etc....

Le déclenchement de ces dispositifs pyrotechniques est commandé par une unité centrale électronique qui reçoit des informations relatives au choc reçu par le véhicule et provenant de différents capteurs d'environnement (accéléromètres, capteurs de choc ou déformation). L'unité centrale électronique gère également éventuellement des informations relatives à la morphologie et au nombre des occupants du véhicule.

Ces dispositifs de sécurité présentent cependant encore des inconvénients.

Un des problèmes majeurs rencontré est celui des déclenchements intempestifs des dispositifs de sécurité, indépendamment de toute situation d'accident.

Les coussins et autres dispositifs de sécurité risquent alors de provoquer des blessures et également des accidents puisque le déclenchement pendant le déplacement du véhicule provoquera une perte de contrôle du véhicule par son conducteur.

Un autre problème rencontré est celui des déclenchements intervenant comme suite à des démontages par des personnels non agréés. Par exemple un remplacement de volant par le propriétaire du véhicule lui même ou encore un démontage anarchique dans une aire de stockage de véhicules en fin de vie.

Les sécurités peuvent alors se trouver déclenchées accidentellement et les dispositifs risquent de blesser ou brûler les opérateurs.

Ces problèmes de sécurité lors des interventions peuvent également se poser chez les mécaniciens agréés, en service après vente, ou encore lors des interventions par les pompiers ou services d'urgence après un accident.

Des moyens de sécurité sont généralement prévus au niveau de l'unité électronique de commande, sous la forme notamment de codages des signaux. Cependant de tels moyens ne permettent pas d'assurer d'une façon suffisamment certaine qu'il n'y aura pas d'initiation intempestive, notamment en situation de démontage ou d'intervention après accident.

C'est le but de l'invention que de proposer un dispositif permettant de pallier de tels inconvénients.

Ainsi le dispositif selon l'invention permet d'éviter les dommages qui risqueraient d'être occasionnés par un déclenchement intempestif d'un initiateur pyrotechnique pour un dispositif de sécurité automobile.

Suivant différentes variantes de l'invention, on pourra définir un dispositif plus particulièrement adapté à une protection pendant les opérations de démontage ou bien à une protection pendant les interventions lors des secours après accident, ou encore lors des opérations de destruction du véhicule.

On pourra également suivant d'autres variantes définir un dispositif permettant d'éviter un déclenchement intempestif lors du fonctionnement du véhicule et en l'absence de toute circonstances d'accident.

Ainsi l'invention a pour objet un dispositif de sécurité pyrotechnique pour véhicule, comprenant au moins un initiateur pyrotechnique destiné à être relié à au moins un générateur de gaz, dispositif caractérisé en ce qu'il comprend un moyen écran mobile interposé entre l'initiateur et le générateur de gaz, moyen écran susceptible d'occuper au moins deux positions, une position armée dans laquelle les gaz chauds produits par l'initiateur peuvent agir sur le générateur et une position de sécurité dans laquelle le moyen écran interdit le passage des gaz de l'initiateur au générateur de gaz, le passage d'une position à l'autre étant commandé par un moyen actionneur.

Suivant une variante, le moyen écran pourra permettre de diriger dans sa position de sécurité les gaz chaud à l'extérieur du dispositif de sécurité et à distance du générateur de gaz.

Suivant un mode de réalisation de l'invention, le dispositif comporte une cuvette interne qui est interposée entre le générateur de gaz et l'écran, cuvette délimitant un volume interne recevant l'écran et au moins partiellement l'initiateur, cuvette interne présentant au moins un trou permettant de relier l'initiateur et le générateur de gaz, trou pouvant être obturé par l'écran lorsqu'il se trouve dans sa position de sécurité.

L'écran peut alors être constitué par une coupelle cylindrique qui sera montée rotative sur une embase cylindrique supportant l'initiateur, coupelle portant au moins un trou susceptible de coopérer avec le trou porté par la cuvette interne.

L'écran portera avantageusement au moins un deuxième trou qui coopérera avec une ouverture portée par l'embase et qui se trouvera obturé par l'embase lorsque l'écran se trouve en position armée et en regard de l'ouverture de l'embase lorsque l'écran se trouve en position de sécurité.

La cuvette interne pourra délimiter avec l'écran une chambre annulaire qui recevra les gaz chaud engendrés par l'initiateur lorsque l'écran se trouve en position de sécurité.

La chambre annulaire pourra communiquer avec l'extérieur du dispositif par au moins un canal.

L'écran pourra être prolongé par une jupe et les moyens actionneurs permettant de commander la rotation de l'écran pourront comprendre un moyen d'entraînement pouvant se translater dans un logement suivant un axe perpendiculaire à celui de la jupe de l'écran, moyen d'entraînement coopérant lors de sa translation avec une partie de la jupe de façon à entraîner celle ci en rotation.

La jupe pourra porter une lumière sur laquelle prendra appui le moyen d'entraînement de façon à entraîner celle ci.

Le moyen d'entraînement pourra être constitué par au moins une bille qui sera poussée par les gaz engendrés par un composant pyrotechnique.

L'écran pourra également être constitué par un fourreau cylindrique qui pourra se translater par rapport à la cuvette interne de façon à obturer ou dégager le ou les trous portés par celle ci.

Avantageusement, le dispositif pourra alors comporter une cuvette externe, les deux cuvettes interne et externe délimitant une cavité à l'intérieur de laquelle peut se translater l'écran.

La cuvette externe pourra porter au moins un trou qui se trouvera, lorsque l'écran se trouve en position de sécurité, en regard d'au moins un perçage complémentaire aménagé sur le fourreau, trou qui se trouvera obturé lorsque l'écran se trouvera en position armée.

L'écran pourra comporter une embase sur laquelle sera fixé l'initiateur.

Le moyen actionneur pourra comprendre un ressort de compression.

Ce ressort de compression pourra être disposé autour de la cuvette externe, entre une collerette solidaire de l'embase et une surface d'appui plane.

Alternativement, le ressort de compression pourra être disposé à l'intérieur de la cuvette externe et autour de l'embase, le ressort se trouvant comprimé entre un épaulement de l'embase et la cuvette externe lorsque le dispositif se trouve dans sa position armée et au moins partiellement détendu lorsque le dispositif se trouve dans sa position de sécurité.

Le moyen actionneur pourra comprendre au moins un doigt solidaire de l'embase et qui s'étend sensiblement parallèlement à celle-ci jusqu'à la cuvette interne, doigt qui se trouvera automatiquement enfoncé lors du montage du dispositif par son appui sur une surface butée, ce qui assurera le passage de l'écran de sa position de sécurité à sa position armée.

Le ressort pourra également être disposé à l'intérieur du fourreau de l'écran et prendre appui entre la cuvette interne et l'embase, le ressort se trouvant à l'état comprimé lorsque le dispositif se trouve dans sa position de sécurité et au moins partiellement détendu lorsque le dispositif passe en position armée, le passage d'une position à l'autre étant commandé par un moyen de déverrouillage.

Le moyen de déverrouillage pourra comprendre un composant pyrotechnique.

Selon un autre mode de réalisation, le dispositif pourra être constitué par un seul composant initiateur, composant comprenant un étui à l'intérieur duquel sera disposée une première composition pyrotechnique qui sera destinée à assurer l'initiation d'un générateur de gaz au travers d'au moins un trou radial, le moyen écran étant constitué par un tube coulissant dans l'étui et obturant en position de sécurité le ou les trous radiaux, le moyen actionneur comprenant un ressort disposé dans l'étui et qui se trouve à l'état comprimé dans la position de sécurité, le tube étant alors immobilisé par un moyen de verrouillage dont la libération par des moyens de commande provoquera le passage du tube de la position de sécurité à la position armée.

Le moyen de verrouillage pourra être constitué par une douille cylindrique fendue qui formera une butée axiale entre le tube et un épaulement interne de l'étui, douille réalisée en un matériau élastique et entourant une première portée cylindrique d'une tige de verrouillage qui maintient la douille dans une position ouverte, la tige comportant une deuxième portée cylindrique de diamètre inférieur à celui de la première, le déplacement de la tige permettant de positionner la deuxième portée cylindrique en regard de la douille, ce qui a pour effet de libérer la douille qui adopte élastiquement le diamètre de cette deuxième portée et libère ainsi le tube.

La tige pourra être poussée dans sa position de verrouillage de la douille par un ressort de compression.

La tige pourra porter une deuxième composition pyrotechnique dont l'initiation permettra de commander la translation de la tige, donc la libération de la douille, ce qui conduira au passage du dispositif à sa position armée.

La première composition pyrotechnique pourra être initiée par au moins deux électrodes principales, l'une reliée électriquement à un godet métallique entourant la première composition et l'autre étant isolée de ce godet, le godet étant isolé électriquement de l'étui par une bague.

La tige pourra comprendre un noyau conducteur entouré par un corps isolant, la deuxième composition pyrotechnique étant initiée par deux électrodes dites de sécurité, la première étant reliée électriquement au corps métallique externe de l'étui et la deuxième étant reliée électriquement au godet entourant la première composition par l'intermédiaire du noyau conducteur et du ressort de compression qui prend appui sur le godet et entoure une extrémité du noyau.

La première électrode de sécurité pourra se trouver dans la position de sécurité en contact avec une surface cylindrique interne de l'étui.

L'invention sera mieux comprise à la lecture de la description qui va suivre d'un mode particulier de réalisation, description faite en référence aux dessins annexés et dans lesquels :
- la figure la représente en coupe longitudinale un dispositif de sécurité selon un premier mode de réalisation de l'invention, dispositif représenté en position armée,
- la figure 1b représente en coupe longitudinale et simplifiée ce même dispositif en position de sécurité, la coupe étant pratiqué suivant le plan dont la trace BB est repérée sur la figure 2a,
- la figure 2a est une coupe transversale de ce dispositif suivant le plan dont la trace AA est représentée à la figure la, dispositif en position armée,
- la figure 2b est une vue de dessus du dispositif suivant la flèche F représentée figure 1b, dispositif en position de sécurité,
- la figure 2c est une vue en coupe partielle suivant le plan dont la trace CC est représentée figure 2a,
- la figure 3a représente en coupe longitudinale un dispositif de sécurité selon un deuxième mode de réalisation de l'invention, dispositif représenté en position armée,
- la figure 3b représente en coupe longitudinale ce même dispositif en position de sécurité,
- la figure 3c est une coupe de ce dispositif en position de sécurité suivant le plan dont la trace DD apparaît sur la figure 3b,
- la figure 4a représente en coupe longitudinale un dispositif de sécurité selon un troisième mode de réalisation de l'invention, dispositif représenté en position armée,
- la figure 4b représente en coupe longitudinale ce même dispositif de sécurité en position de sécurité,
- la figure 5a représente en coupe longitudinale un dispositif de sécurité selon un quatrième mode de réalisation de l'invention, dispositif représenté en position armée,
- la figure 5b représente en coupe longitudinale ce même dispositif en position de sécurité,
- la figure 5c est une vue du cavalier porte doigt seul qui est mis en oeuvre dans le dispositif suivant les figures 5a, 5b,
- la figure 6a représente en coupe longitudinale un dispositif de sécurité selon un cinquième mode de réalisation de l'invention, dispositif représenté en position armée,
- la figure 6b représente en coupe longitudinale ce même dispositif en position de sécurité,
- la figure 7a représente en coupe longitudinale un dispositif de sécurité selon un sixième mode de réalisation de l'invention, dispositif représenté en position de sécurité,
- la figure 7b représente en coupe longitudinale ce même dispositif en position armée.

En se reportant aux figures la à 2c un dispositif de sécurité 1 suivant un premier mode de réalisation de l'invention comprend un support 2 d'un initiateur pyrotechnique 4 qui est fixé par des pattes 6 et des moyens de fixation (tels que des vis 7) à un système 3 de sécurité, comprenant un générateur pyrotechnique de gaz 5.

Le système 3 et le générateur de gaz ne sont pas décrits ici en détail. Ils sont bien connus de l'homme du métier et on pourra notamment se reporter aux brevets FR2691706 et EP509655 qui décrivent des générateurs de gaz.

D'une façon classique un moyen électronique de commande 8 solidaire du véhicule provoque en cas d'accident le déclenchement de l'initiateur 4 qui génère un jet de gaz chaud qui provoque l'allumage du générateur de gaz 5.

Les initiateurs pyrotechniques 4 sont également bien connus de l'Homme du Métier et ne seront pas décrits plus en détails. On pourra par exemple se reporter au brevet FR2720493 qui décrit un tel initiateur.

Le support 2 présente un alésage axial 9 qui est prolongé par une portée conique 10 sur laquelle prend appui un bourrelet 11 de l'initiateur 4. Une cale 12 présentant un lamage dans lequel est disposé un joint d'étanchéité torique 13 coiffe l'initiateur 4. Un sertissage 14 du support 2 sur la cale 12 assure la solidarisation étanche de l'initiateur 4 et du support.

Conformément à l'invention une cuvette interne 15, réalisée par exemple en tôle d'acier emboutie, est fixée par un sertissage de son rebord 16 sur une portée conique 17 du support 2. Cette cuvette 15 est percée de trous 18, 20. Les trous 18 d'un premier groupe traversent la paroi de fond 19 de la cuvette et ils ont un axe sensiblement parallèle à l'axe 21 de l'initiateur 4. Les trous 20 d'un deuxième groupe sont réalisés suivant des directions perpendiculaires à l'axe 21 de l'initiateur et ils traversent la surface cylindrique de la cuvette interne 15. La cuvette 15 présente ici quatre trous 18 régulièrement répartis angulairement ainsi que quatre trous 20 également régulièrement répartis angulairement.

Suivant ce mode particulier de réalisation de l'invention un moyen 22 formant un écran mobile est disposé à l'intérieur de la cuvette interne 15. Cet écran est constitué ici par une coupelle cylindrique, elle aussi réalisée en tôle emboutie, et dont le profil externe correspond sensiblement au profil interne de la cuvette interne 15.

Cette coupelle écran 22 est montée rotative sur une embase cylindrique 23 aménagée sur le support 2 portant l'initiateur 4.

La coupelle 22 porte, tout comme la cuvette 15, des trous 24,25. Les trous 24 d'un premier groupe traversent une paroi de fond 26 de la cuvette et ils ont un axe sensiblement parallèle à l'axe 21 de l'initiateur 4.

Ces trous sont destinés à se trouver en regard des trous 18 de la cuvette 15 lorsque le dispositif se trouve dans une position armée. Ils ont donc la même répartition angulaire que ces derniers et se trouvent sur un même cercle.

Les trous 25 d'un deuxième groupe sont réalisés suivant des directions perpendiculaires à l'axe 21 de l'initiateur et ils traversent la surface cylindrique de la coupelle 22.

Ces trous 25 sont destinés à se trouver en regard des trous 20 de la cuvette 15 lorsque le dispositif se trouve dans une position armée. Ils ont donc la même répartition angulaire que ces derniers et ont leurs axes dans le même plan.

La coupelle 22 a le même nombre de trous que la cuvette 15. Elle comporte donc ici quatre trous 24 régulièrement répartis angulairement ainsi que quatre trous 25 également régulièrement répartis angulairement.

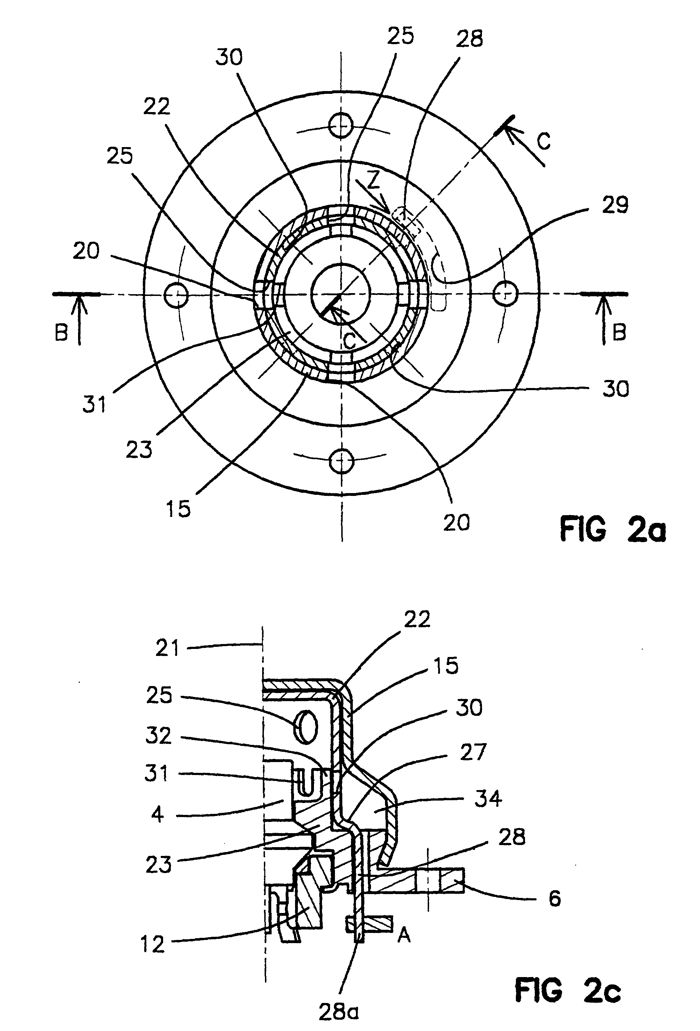

La coupelle 22 présente une collerette 27 qui est en appui sur une face supérieure du support 2. Cette collerette porte une languette 28 qui traverse le support 2 au travers d'une lumière en arc de cercle 29 (voir figures 2c et 2a). La lumière 29 a une longueur couvrant environ un angle de 45°. L'extrémité 28a de la languette 28 est destinée à être poussée par un actionneur A (non représenté en détail).

L'actionneur exercera un effort suivant la direction Z (figure 2a) et permettra ainsi de faire pivoter la coupelle 26 autour de son axe 21. L'angle de pivotement sera déterminé par la longueur de la lumière 29.

Le type d'actionneur sera choisi par l'Homme du Métier en fonction des caractéristiques recherchées pour le dispositif de sécurité. On pourra par exemple utiliser un ressort qui sera maintenu à l'état bandé et libéré par un moyen verrou.

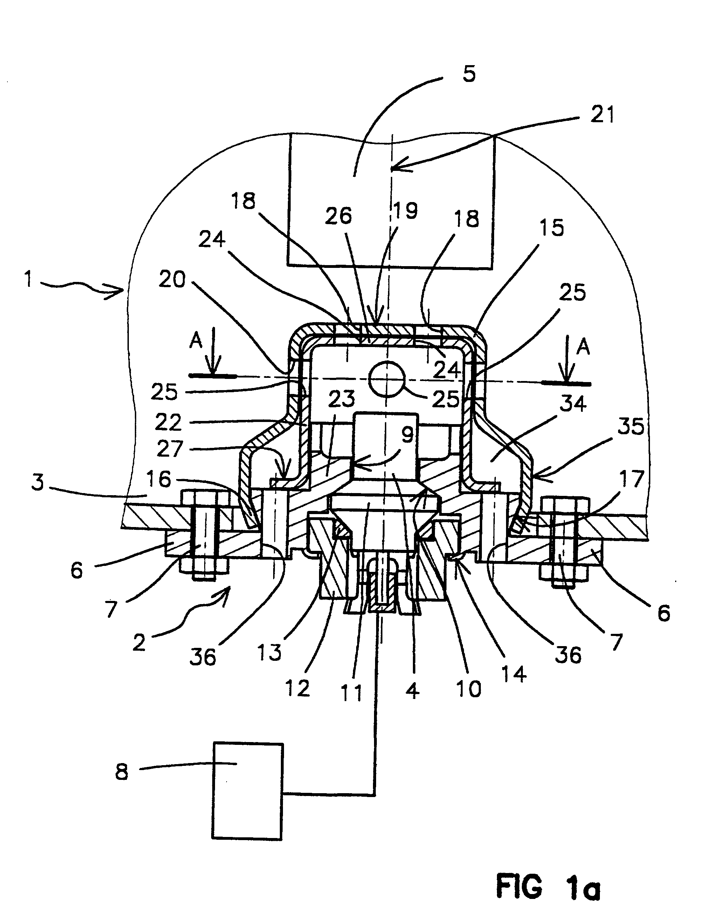

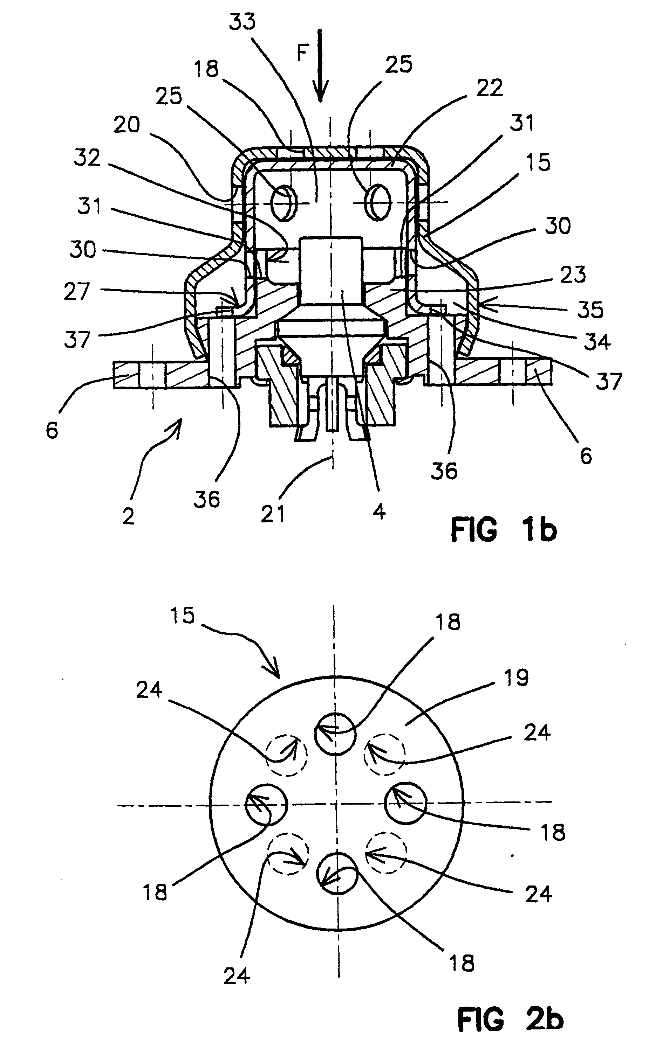

Dans ce cas le dispositif sera normalement dans un état armé qui est celui représenté à la figure 1a. La libération du ressort fera passer le dispositif dans son état de sécurité qui est celui représenté à la figure 1b. Pour la clarté des figures on n'a représenté le système 3 et le générateur de gaz 5 que sur la figure 1a.

On pourra également utiliser comme actionneur un petit poussoir à commande électrique ou pneumatique. Dans ce cas il sera possible de faire passer à volonté le dispositif d'un état de sécurité à un état armé et inversement.

La coupelle écran 22 porte également un autre groupe de trous 30 qui sont réalisés au travers de sa surface cylindrique et au voisinage de sa collerette 27 (voir figure 1b).

Lorsque le dispositif se trouve dans sa position de sécurité (figure 1b) chacun de ces trous 30 se trouve en regard d'une ouverture 31 qui est portée par l'embase 23.

Les ouvertures 31 ont ici la forme de créneaux régulièrement répartis angulairement et découpés sur une paroi amincie 32 de l'embase 23.

La coupelle 22 porte donc ici quatre trous 30 régulièrement répartis angulairement qui coopèrent avec quatre créneaux 31 ayant la même répartition angulaire.

Le positionnement relatif des trous 25 et 30 qui traversent la paroi cylindrique de la coupelle 22 est plus particulièrement visible sur la figure 2a. Les quatre trous 30 (en pointillés) sont décalés de 45° par rapport aux quatre trous 25. De même les créneaux 31 ont les mêmes répartitions angulaires que les trous 20 portés par la cuvette interne 15.

Ainsi, lorsque le dispositif se trouve dans la position armée représentée aux figures la, 2a et 2c, les trous 20 de la cuvette interne 15 se trouvent en regard des trous 25 portés par la coupelle mobile 22. Il en est de même des trous 18 de la cuvette et des trous 24 de la face supérieure de la coupelle 22.

Par ailleurs les trous 30 portés par la coupelle 22 se trouvent obturés par la paroi amincie 32 de l'embase 23.

Lorsque le dispositif se trouve dans cette position, les gaz chauds engendrés par l'initiateur pyrotechnique 4 peuvent traverser la coupelle écran 22 et ils peuvent donc initier le générateur de gaz 5.

Lorsque l'actionneur A agit sur la coupelle par l'intermédiaire de la languette 28 pour faire tourner celle ci autour de l'embase 23, le dispositif passe de sa position armée à la position sécurité représentée aux figures 1b, 2b.

Dans cette position les trous 25 et 24 de la coupelle 22 se trouvent obturés par la cuvette interne 15. De même les trous 20 et 18 de la cuvette interne se trouvent obturés par la coupelle écran 22. Dans cette position les gaz engendrés par l'initiateur 4 ne peuvent atteindre le générateur de gaz.

Lorsque le dispositif se trouve dans la position de sécurité, les trous 30 se trouvent en regard des ouvertures 31 portés par la paroi amincie 32 de l'embase 23.

Ainsi les gaz engendrés par l'initiateur 4 remplissent le volume interne 33 de la coupelle 22, puis ils s'échappent au travers des ouvertures 31 et des trous 30.

Les gaz chauds se répandent dans une chambre annulaire 34 qui est délimitée par un élargissement 35 de la cuvette interne 15, la paroi externe de la coupelle 22 et le support 2.

Le volume interne 33 et la chambre annulaire 34 permettent de détendre les gaz engendrés par l'initiateur 4.

Les gaz pourront être dirigés vers l'extérieur du dispositif au travers de canaux 36 régulièrement répartis angulairement et qui traversent le support 2.

Des encoches 37 (figure 1b) seront aménagées sur la collerette 27 de la coupelle 22 afin d'éviter l'obturation des canaux 36 par celle ci lorsqu'elle se trouve en position de sécurité.

Les gaz détendus et partiellement refroidis peuvent ainsi être dirigés à l'extérieur du dispositif de sécurité et à distance du générateur de gaz 5.

A titre de variante il est bien entendu possible de concevoir un dispositif dépourvu de canaux 36. Dans ce cas les gaz engendrés par l'initiateur 4 lorsque le dispositif se trouve en position de sécurité resteront confinés à l'intérieur du volume interne 33 et éventuellement de la chambre annulaire 34.

Les canaux 36 permettent d'éviter un tel confinement et autorisent l'emploi de matériaux moins épais et/ou moins résistants pour réaliser la coupelle 22 et la cuvette 15.

Il est possible à titre de variante et en fonction du but recherché de définir un dispositif dans lequel les moyens actionneurs sont conçus pour assurer un passage de la position armée à la position de sécurité, ou bien un passage de la position de sécurité à la position armée ou encore un passage à volonté d'une position à l'autre.

Ainsi afin de pallier uniquement les incidents dus à un démontage du dispositif on pourra choisir un dispositif qui se trouve normalement en position armée.

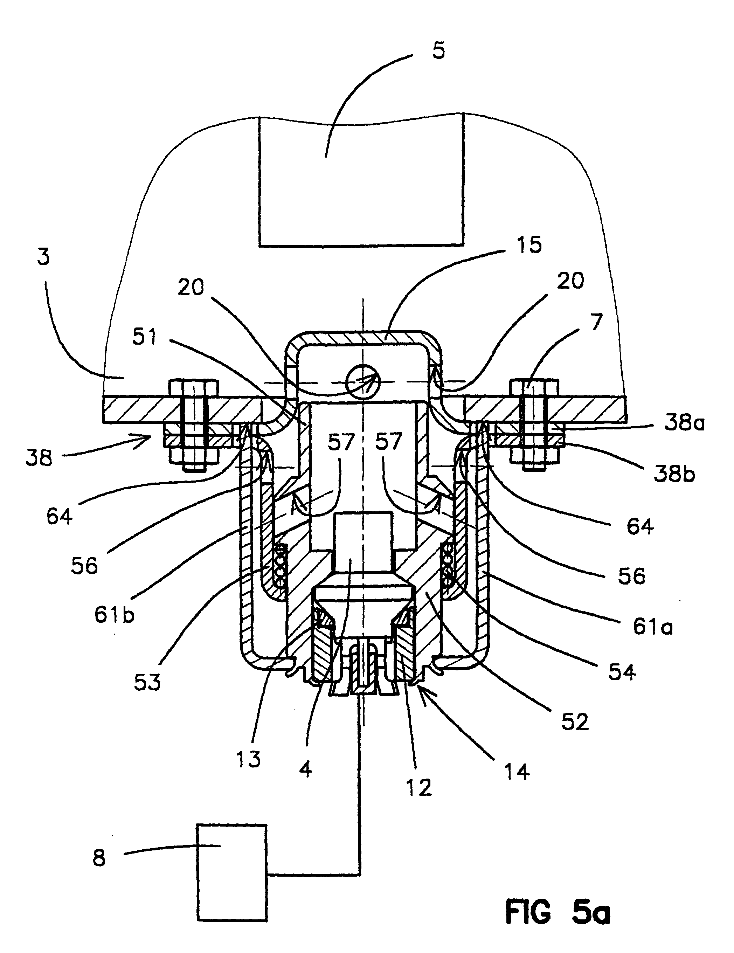

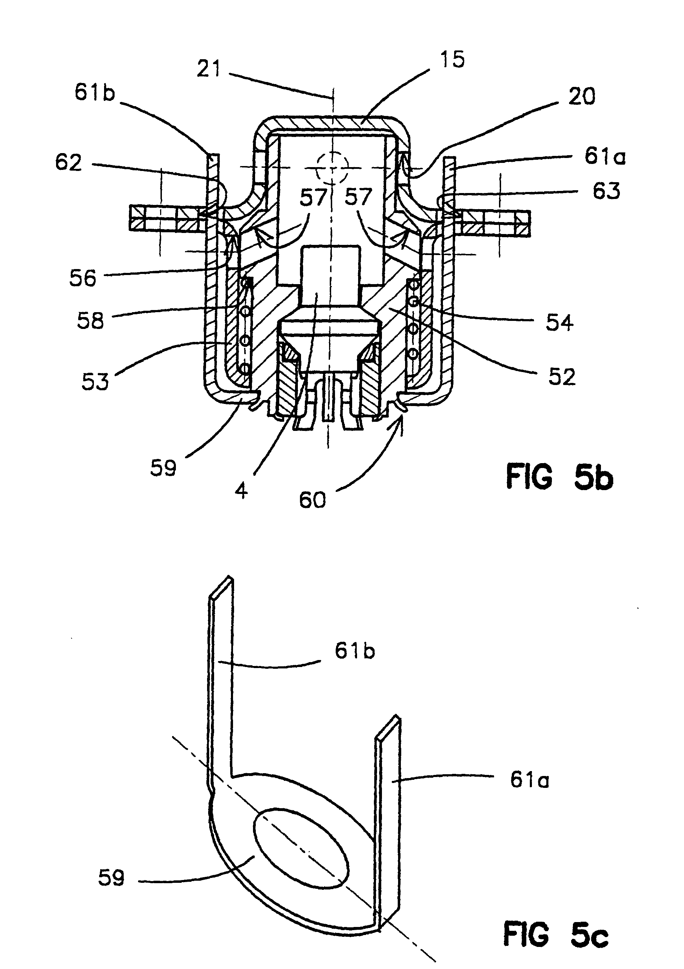

Le moyen actionneur comprendra par exemple un ressort à l'état bandé qui se libérera comme suite au démontage du dispositif. Le mode de réalisation des figures 5a et 5b précisera un exemple particulier de réalisation.

Afin de pallier également aux incidents dus aux initiations intempestives comme suite au démarrage du véhicule (mise sous tension des circuits), on pourra prévoir un dispositif qui se trouve normalement en position de sécurité et qui est mû par un actionneur par exemple électromagnétique ou pneumatique (relié au système d'assistance au freinage par exemple).

Dans ce cas l'électronique de commande sera programmée de façon à assurer un passage en position armée quelques secondes seulement après le démarrage du moteur.

Cette même électronique provoquera un retour en position de sécurité lors de l'arrêt du véhicule.

On pourra, en jouant uniquement sur la programmation de l'unité de commande, n'effacer le volet de sécurité que si la vitesse du véhicule dépasse un certain seuil. Dans ce cas on évitera les déclenchements intempestifs dus à un choc léger, notamment lors des manoeuvres de parking.

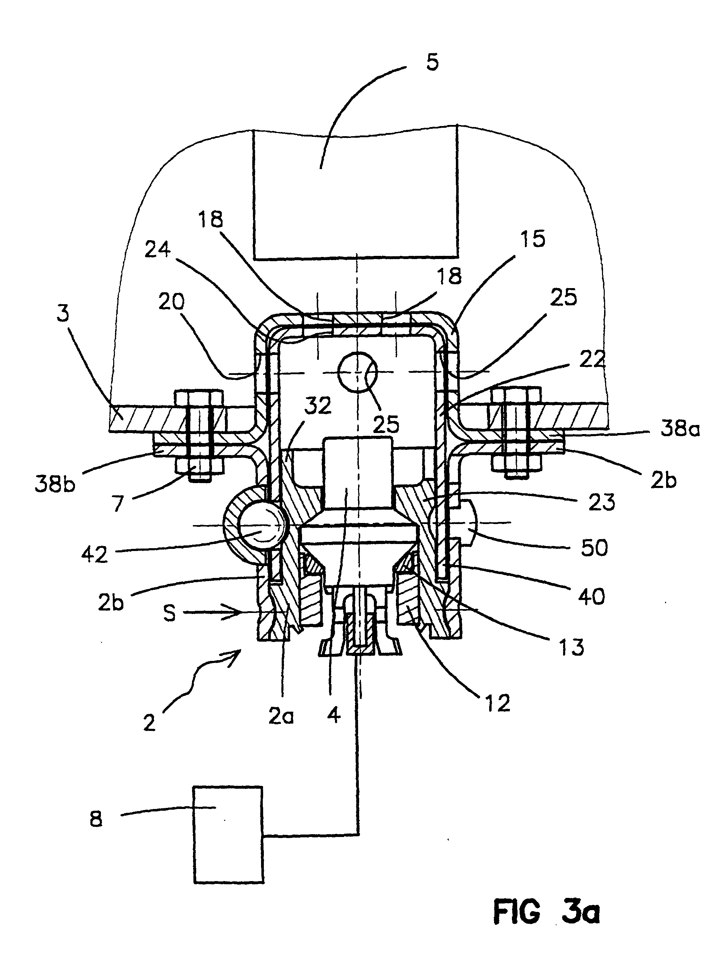

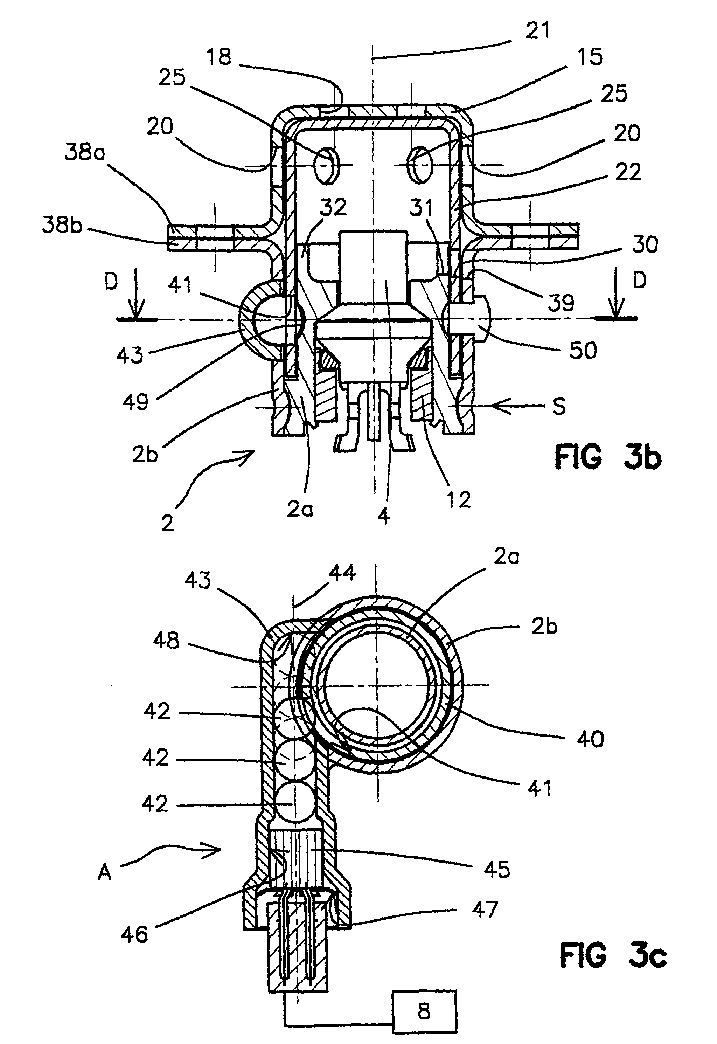

Enfin on pourra prévoir un moyen assurant l'effacement du volet uniquement lors de l'imminence d'un accident. Dans ce cas l'actionneur sera un actionneur pyrotechnique. Les modes de réalisation des figures 3, 6 et 7 illustrent de telles variantes.

Les figures 3a, 3b et 3c montrent un deuxième mode de réalisation de l'invention. Ce mode est analogue au précédent et comporte une cuvette interne 15 ainsi qu'une coupelle 22 montée rotative sur une embase 23 d'un support 2.

Pour la clarté des figures on n'a représenté le système 3 et le générateur de gaz 5 que sur la figure 3a.

La cuvette interne 15 porte des trous 18 et 20 avec une répartition identique à celle décrite précédemment. La coupelle 22 porte elle aussi des trous 24 et 25 avec une répartition identique à celle décrite précédemment.

Les trous 24 sont destinés à coopérer avec les trous 18 de la cuvette. Les trous 25 de la coupelle sont destinés à coopérer avec les trous 20 de la cuvette.

Ce mode de réalisation diffère du précédent en ce que le support 2 comprend une partie centrale 2a qui reçoit l'initiateur pyrotechnique 4 et une enveloppe 2b en tôle emboutie qui est sertie en S (sertissage annulaire) sur la partie centrale 2a.

Ce mode de réalisation diffère également du précédent en ce que la cuvette interne 15 ne comporte pas d'élargissement 35, donc pas de chambre annulaire 34. La cuvette interne emboutie et l'enveloppe 2b du support portent toutes deux une collerette circulaire 38a, 38b qui sont appliquées l'une sur l'autre pour former une couronne permettant la fixation du dispositif sur le système 3 au moyen de vis 7.

La cuvette 15 et l'enveloppe 2b pourront être rendues solidaires l'une de l'autre par exemple par soudure au niveau de leurs collerettes.

Suivant ce mode de réalisation la coupelle 22 porte un seul trou d'évacuation de gaz 30 qui se trouve dans la position armée (figure 3a) obturé par la paroi amincie 32 de l'embase 23 (bien entendu on pourrait prévoir plusieurs trous d'évacuation). Ce trou 30 se trouve, lorsque le dispositif est en position de sécurité (figure 3b), en regard d'un trou 39 aménagé au travers de l'enveloppe 2b du support 2.

Ce mode de réalisation diffère essentiellement du mode de réalisation précédent par la nature du moyen actionneur.

Ainsi suivant ce mode de réalisation, la coupelle écran 22 est prolongée par une jupe 40 qui est interposée entre la partie centrale 2a du support et l'enveloppe 2b de celui ci.

La jupe 40 porte une lumière 41 (voir figure 3c) qui est aménagée suivant une direction circulaire de la jupe.

Le moyen d'entraînement A comprend ici trois billes 42 qui sont disposées dans un conduit 43 sensiblement cylindrique qui est fixé à l'enveloppe 2b du support 2. Le conduit 43 a un axe 44 qui est sensiblement tangent à la surface externe de la partie centrale 2a du support.

Le conduit 43 porte un composant pyrotechnique 45 qui est disposé au niveau d'une partie élargie 46 de celui ci et qui est rendu solidaire du conduit par un moyen de fixation qui est ici une rondelle ressort 47.

Dans la position de sécurité telle que représentée aux figures 3b et 3c, les billes sont immobilisées en translation entre le composant pyrotechnique 45 et un rebord de la lumière 41.

Lorsque le composant pyrotechnique 45 est initié, les gaz qu'il engendre poussent les billes 42. Un tel mouvement a pour effet d'exercer une poussée tangentielle au niveau de la lumière 41, ce qui entraîne le pivotement de la coupelle écran 22 autour de l'axe 21 et le passage de la position de sécurité à la position armée(figure 3a). Le mouvement de pivotement de la coupelle est stoppé lorsque les billes 42 arrivent en butée au fond 48 du conduit 43.

La coupelle 22 est immobilisée en position de sécurité par une goupille radiale 50 réalisée en matière plastique et qui traverse l'enveloppe 2b et la coupelle 22 (figure 3b).

Le mouvement de rotation de la coupelle 22 qui est commandé par l'initiation du composant 45 provoque le cisaillement de la goupille 50 (figure 3a).

Afin de faciliter le mouvement des différentes pièces la partie centrale 2a du support 2 porte une empreinte torique 49 qui permet le roulement des billes (voir figure 3a).

Le fonctionnement de ce dispositif est analogue à celui du dispositif décrit précédemment.

Dans la position armée (figure 3a) les gaz engendrés par l'initiateur 4 peuvent atteindre le générateur de gaz 5 au travers des trous 18-24 et 25-20.

Dans la position de sécurité (figure 3b) les gaz engendrés par l'initiateur sont déviés hors du dispositif par l'ouverture 31, le trou 30 et le trou 39.

Le passage de la position de sécurité à la position armée est commandé par l'initiation du composant 45.

Celui ci est (tout comme l'initiateur 4) relié aux moyens électroniques 8 de commande du véhicule.

Le déclenchement du passage de la position armée à la position de sécurité sera par exemple provoqué automatiquement quelques millisecondes avant le déclenchement de l'initiateur 4.

Une telle disposition renforce la sécurité du dispositif de protection puisque la probabilité pour qu'il intervienne un déclenchement intempestif de l'initiateur 4 précédé par celui du composant pyrotechnique 45 est pratiquement nulle.

Un tel mode de réalisation du dispositif est donc particulièrement adapté à la protection contre les déclenchements intempestifs pouvant conduire à la perte de contrôle du véhicule lorsque il se trouve en fonctionnement normal.

Il est bien entendu possible à titre de variante de faire varier le nombre de trous réalisés dans la coupelle 22 et dans la cuvette 15. Cela aussi bien pour ce mode de réalisation que pour le précédent (figures la à 2c).

Il est aussi possible d'assurer l'entraînement en rotation de la coupelle écran par un autre moyen d'entraînement que les billes. Il est possible par exemple de remplacer les billes par un piston cylindrique. Il est également possible de remplacer les billes par une crémaillère coulissante engrenant sur une denture portée par la coupelle.

Il est possible enfin de remplacer le composant pyrotechnique 45 par un actionneur électromagnétique ou pneumatique qui sera commandé par l'unité centrale de commande et qui exercera une poussée sur un moyen d'entraînement, par exemple sur les billes. L'emploi d'un actionneur électromagnétique permettra de rendre le système réversible.

Une telle variante sera utilisée pour pallier les déclenchements intempestifs intervenant lors du démarrage du véhicule ou bien à faible vitesse. L'unité centrale de commande électronique commandera le passage en position armée uniquement quelques secondes après le démarrage ou bien lorsque la vitesse dépasse un certain seuil.

On pourra à titre de variante concevoir un dispositif dépourvus des trous d'évacuation 30, 39. Dans ce cas on concevra la cuvette interne et la coupelle de telle sorte qu'elles résistent à la pression des gaz qui resteront confinés à l'intérieur du dispositif.

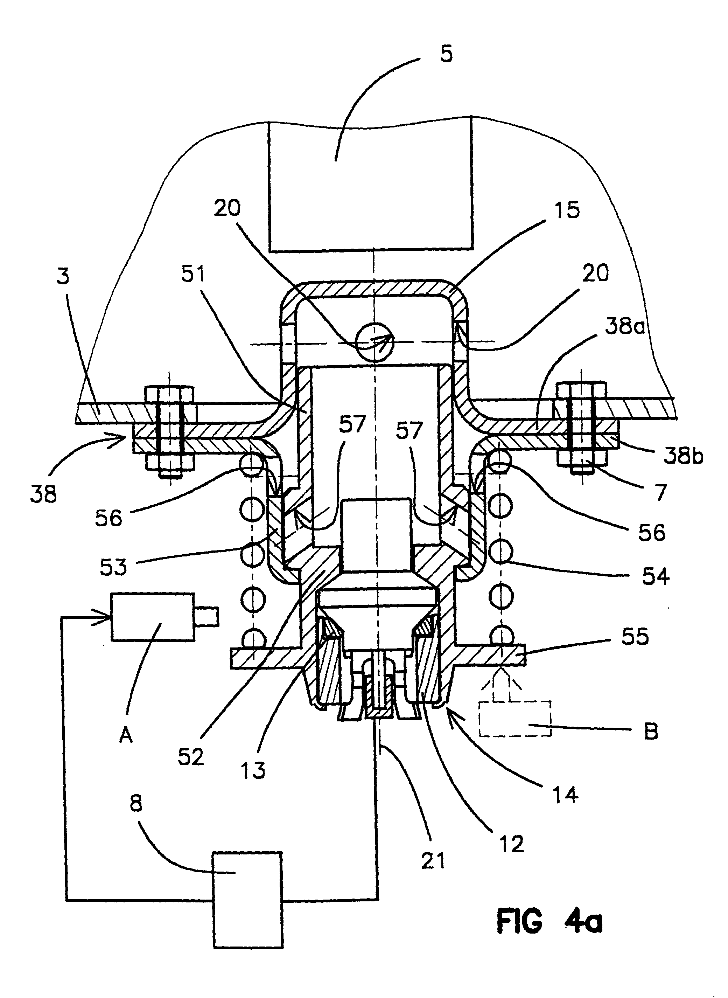

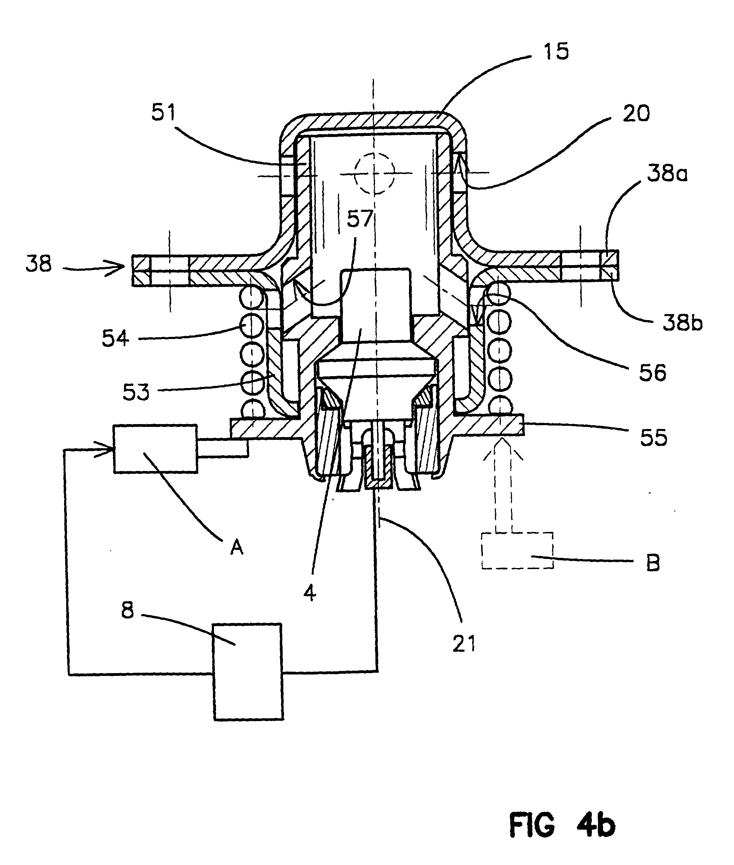

Les figures 4a et 4b montrent un dispositif suivant un troisième mode de réalisation de l'invention.

Pour la clarté des figures on n'a là encore représenté le système 3 et le générateur de gaz 5 que sur la figure 4a.

Suivant ce mode de réalisation les trous 20 portés par la cuvette interne 15 (uniquement sur sa surface cylindrique) sont obturés par un écran mobile constitué par un fourreau cylindrique 51 qui peut se translater par rapport à la cuvette interne 15 et suivant la direction matérialisée par l'axe 21 de l'initiateur 4.

L'écran 51 présente une embase 52 sur laquelle est fixé l'initiateur 4 qui se déplace donc avec l'écran.

La fixation est assurée comme décrit précédemment par un sertissage 14 d'une cale 12 avec interposition d'un joint d'étanchéité torique 13.

Le dispositif selon ce mode de réalisation comporte une cuvette externe 53 en tôle emboutie qui est rendue solidaire de la cuvette interne 15 (par exemple par soudure) au niveau de leurs collerettes circulaires 38a, 38b. Les collerettes 38a,38b sont appliquées l'une à l'autre et forment une couronne 38 permettant la fixation du dispositif sur le système 3 au moyen de vis 7.

Les deux cuvettes interne 15 et externe 53 délimitent ainsi une cavité à l'intérieur de laquelle peut se translater l'écran 51.

Un ressort de compression 54 est disposé autour de la cuvette externe 53 et entre une collerette 55 solidaire de l'embase 52 et une surface d'appui plane formée par la collerette 38b de la cuvette externe 53.

Le ressort 54 est en position comprimée lorsque le dispositif se trouve dans sa position de sécurité (figure 4b).

Le ressort 54 joue le rôle de moyen actionneur permettant le passage de la position de sécurité à la position armée.

Le moyen actionneur est libéré par un moyen de déverrouillage qui est ici constitué par un verrou électromagnétique A qui est actionné par l'unité électronique de commande 8 de la sécurité du véhicule.

En fonction du but recherché, tout autre type de moyen de déverrouillage pourrait être adopté, notamment un moyen de déverrouillage pyrotechnique.

Suivant ce mode particulier de réalisation, la cuvette externe 53 porte des trous 56 régulièrement répartis angulairement (ici quatre trous) réalisés suivant des directions radiales et sensiblement au voisinage de la collerette 38b.

Par ailleurs le fourreau 51 porte quatre perçages 57 ayant chacun un axe incliné par rapport à l'axe 21 de l'initiateur et du fourreau.

Lorsque le fourreau / écran 51 se trouve en position de sécurité (figure 4b), les perçages 57 se trouvent en regard des trous 56 aménagé sur la cuvette externe 53.

Dans cette même position les trous 20 sont obturés par le fourreau. Ainsi un déclenchement de l'initiateur 4 dans cette position ne conduit pas à l'allumage du générateur de gaz 5. Les gaz engendrés par l'initiateur 4 sont dirigés vers l'extérieur du générateur.

L'écran 51 sera lié en rotation à la cuvette externe 53 par un moyen non représenté (par exemple un pion lié à la cuvette et circulant dans une rainure longitudinale de l'écran). Une telle disposition permet d'assurer un bon positionnement angulaire de l'écran par rapport à la cuvette externe donc le bon positionnement des trous 56 en regard des perçages 57.

Lorsque le fourreau / écran 51 se trouve en position armée (figure 4a), les perçages 57 sont obturés par la cuvette extérieure 53.

Dans cette même position les trous 20 sont dégagés par le fourreau. Ainsi un déclenchement de l'initiateur 4 dans cette position conduira à l'émission de gaz d'allumage vers le générateur de gaz 5.

On pourra là encore à titre de variante concevoir un dispositif dépourvu des trous 56 et perçages d'évacuation 57. Dans ce cas on concevra le fourreau 51 et la cuvette interne 15 de telle sorte qu'elles résistent à la pression des gaz qui resteront confinés à l'intérieur du dispositif.

La mise en oeuvre de ce dispositif est analogue à celle du dispositif décrit précédemment. Le verrou A est relié aux moyens électroniques de commande du véhicule. Il est libéré automatiquement quelques millisecondes avant le déclenchement de l'initiateur 4.

Une telle disposition renforce la sécurité du dispositif de protection puisque la probabilité pour qu'il intervienne un déclenchement intempestif de l'initiateur 4 précédé par celui du composant pyrotechnique 45 est pratiquement nulle.

A titre de variante on pourra prévoir un actionneur B (représenté en pointillés), par exemple électromagnétique, qui pourra à volonté agir sur la collerette 55 du dispositif pour provoquer le déplacement du fourreau 51 d'une position à l'autre. Une telle disposition permettra de rendre le dispositif réversible. Le système sera alors normalement en position de sécurité et l'actionneur B commandera le passage en position armée quelques secondes après le démarrage du véhicule ou encore lorsque la vitesse dépasse un seuil.

Les figures 5a et 5b représentent un autre mode de réalisation qui diffère du précédent en ce que le ressort de compression 54 est disposé à l'intérieur de la cuvette externe et autour de l'embase 52.

Le dispositif est représenté fixé sur le système 3 à la figure 5a et démonté à la figure 5b.

Le ressort 54 se trouve ainsi comprimé entre un épaulement 58 de l'embase 52 et la cuvette externe 53 lorsque le dispositif se trouve dans sa position armée (figure 5a) et au moins partiellement détendu lorsque le dispositif se trouve dans sa position de sécurité (figure 5b).

Ce dispositif diffère également du précédent en ce qu'il comprend une rondelle 59 qui coiffe l'embase 52 et qui en est rendue solidaire par un moyen de liaison (ici un sertissage annulaire 60).

La rondelle 59 porte deux doigt 61a, 61b qui s'étendent sensiblement parallèlement à l'embase 52.

Les doigts traversent les collerettes 38a, 38b par des perçages 62, 63 et ils s'étendent ainsi le long de la cuvette interne 15.

Les doigts 61a et 61b forment avec le ressort 54 les moyens actionneurs du dispositif.

On voit figure 5a que lorsque le dispositif est fixé à un système 3 les extrémités des doigts 61a,61b sont en appui contre une surface butée 64 du système 3.

Ainsi le montage du dispositif sur le système générateur de gaz provoque automatiquement la mise en compression du ressort 54 et le passage de l'écran / fourreau 51 de sa position de sécurité (figure 5b) à sa position armée (figure 5a).

Inversement le démontage du dispositif provoque le retour de celui ci à sa position de sécurité (figure 5b).

Une telle solution est donc particulièrement adaptée pour résoudre les problèmes de sécurité dus aux démontages des systèmes de sécurité pyrotechnique.

Tout démontage des vis de fixation 7 du dispositif entraînera automatiquement un retour du dispositif dans une position de sécurité dans laquelle les trous 20 sont obturés et les flammes engendrées par l'initiateur ne peuvent pas atteindre le générateur de gaz 5.

Il sera avantageux avec un tel mode de réalisation de supprimer les perçages 56 et 57 et de rendre ainsi le dispositif totalement étanche dans sa position de sécurité. On évitera alors toute brûlure du manipulateur par un déclenchement inopiné de l'initiateur lors d'un démontage.

A titre de variante il sera possible de remplacer les doigts 61 par un moyen permettant l'effacement de la sécurité lors du branchement du connecteur électrique sur l'initiateur 4. Ainsi on sera assuré que lors du débranchement de ce connecteur le dispositif reviendra automatiquement en position de sécurité.

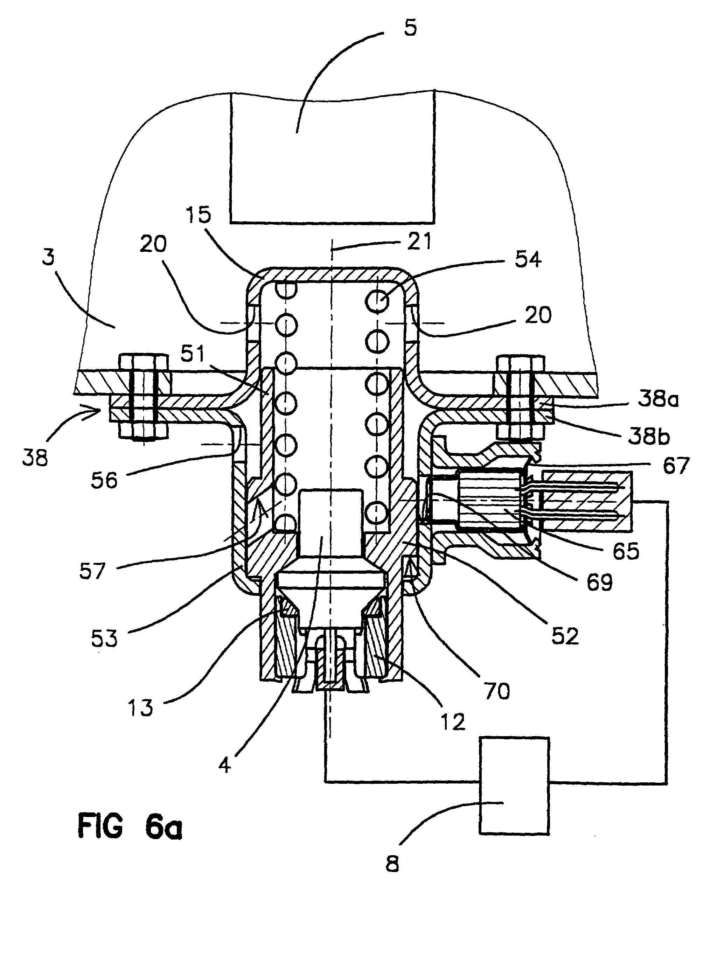

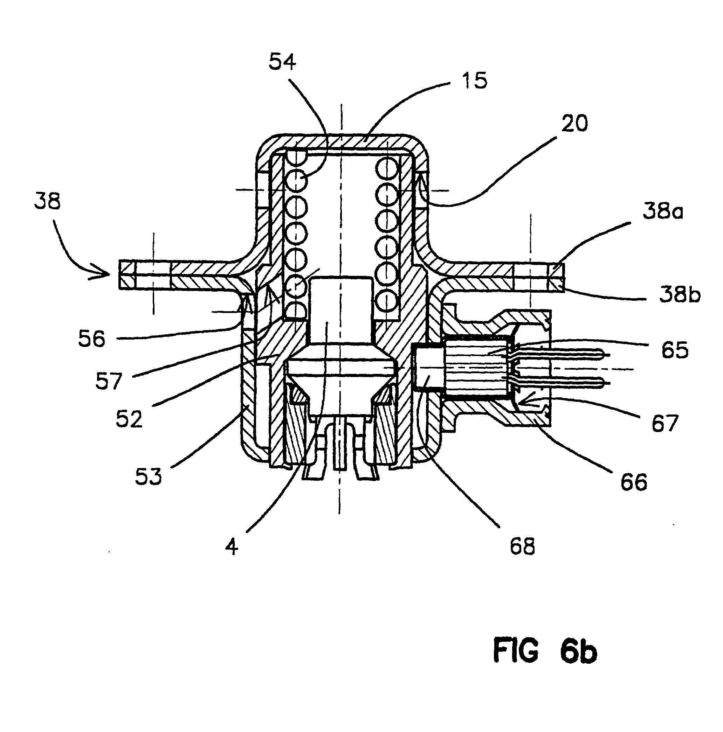

Les figures 6a et 6b montrent un autre mode de réalisation proche dans son fonctionnement de celui suivant les figures 4a et 4b.

Pour la clarté des figures on n'a représenté le système 3 et le générateur de gaz 5 que sur la figure 6a.

Ce mode diffère du mode suivant les figures 4a/4b en ce que le ressort 54 est disposé à l'intérieur du fourreau 51 de l'écran. Le ressort prend ainsi appui entre la cuvette interne 15 et l'embase 52.

Le ressort 54 se trouve à l'état comprimé lorsque le dispositif est dans sa position de sécurité (figure 6b) et il est au moins partiellement détendu lorsque le dispositif se trouve en position armée (figure 6a).

Ce mode diffère également du mode des figures 4a/4b par la structure du moyen permettant de déverrouillage du ressort.

Ici ce moyen comprend un composant pyrotechnique 65 qui est relié aux moyens électroniques 8 de commande de la sécurité du véhicule.

Le composant 65 est disposé dans un boîtier 66 qui est fixé, par exemple par soudure, sur la surface externe de la cuvette externe 53. Le composant est rendu solidaire axialement du boîtier par une rondelle élastique de maintien 67 qui prend appui sur la surface cylindrique interne d'un logement du boîtier.

Le composant 65 est disposé dans une alvéole cylindrique mince 68 formant une tige qui pénètre à l'intérieur de la cuvette externe 53 au travers d'un trou 69 et qui joue le rôle de butée sur laquelle prend appui une encoche hémicylindrique 70 réalisée sur l'embase 52. L'alvéole 68 est réalisée en tôle emboutie et elle reçoit le composant 65. Cette alvéole est percée axialement. Ainsi les gaz engendrés par le composant 65 pourront s'exercer au travers de ce perçage sur l'embase 52.

Le composant sera ainsi un composant générateur de gaz qui reculera sous l'effet du choc et de la pression qu'il génère, entraînant la tige/alvéole 68 et adoptant une position (telle que représentée figure 6a) dans laquelle il se trouvera dégagé de l'encoche 70.

A titre de variante Le composant pyrotechnique 65 pourrait également être un rétracteur pyrotechnique comportant une tige 68 qui s'effacerait lors de l'initiation du composant.

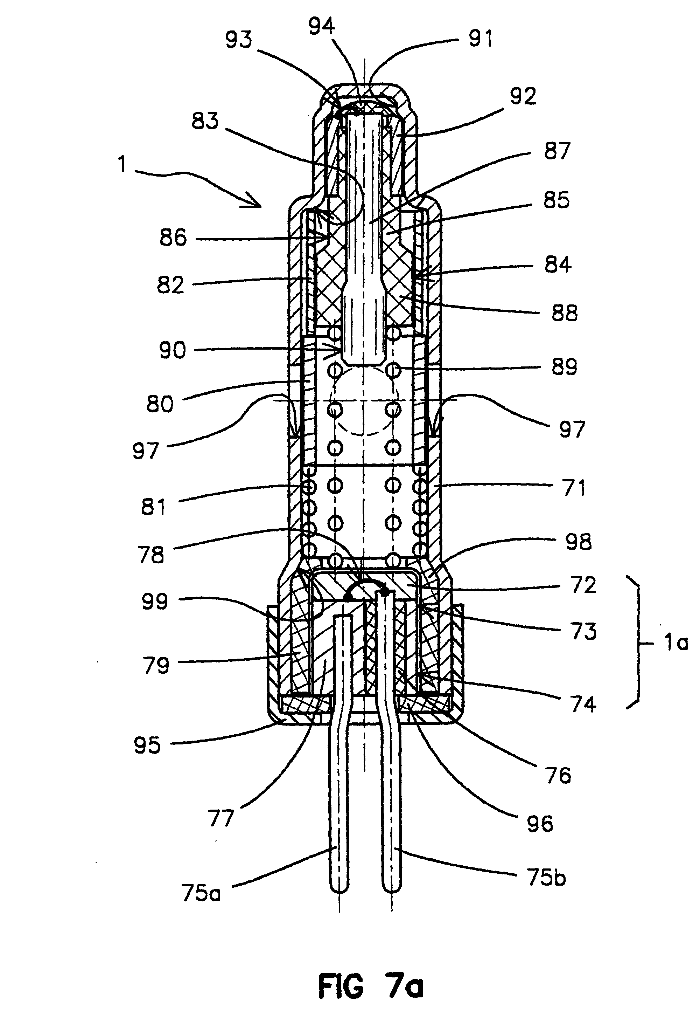

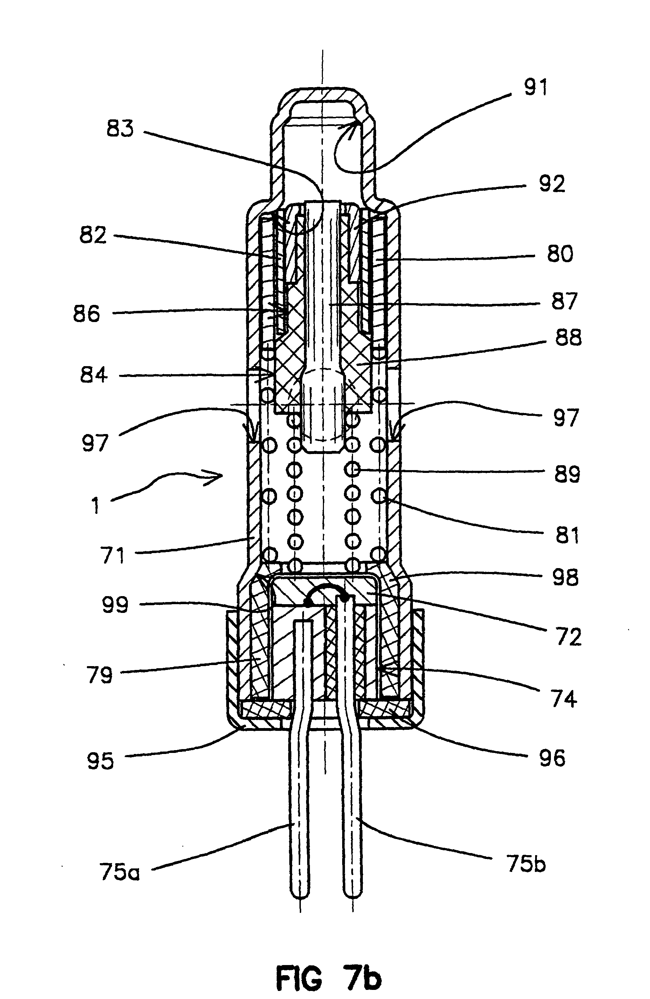

Les figures 7a et 7b montrent un autre mode de réalisation d'un dispositif selon l'invention.

Ce mode diffère de tous les modes précédents en ce qu'il est constitué par un seul composant initiateur qui est destiné (avec quelques adaptations dimensionnelles) à être monté à l'intérieur d'un système de sécurité classique.

Ce composant comprend un étui 71 métallique fermé, à l'intérieur duquel est disposée une première composition pyrotechnique 72 qui est destinée à assurer l'initiation d'un générateur de gaz (non représenté) au travers de trous radiaux 97 (ici quatre trous).

Une première partie la du composant 1 forme un initiateur pyrotechnique de structure classique. Elle comprend un godet 73 métallique à l'intérieur duquel est disposée la première composition pyrotechnique 72 qui sera par exemple une composition oxydoréductrice associée éventuellement à un explosif primaire.

Le godet 73 est fermé par une embase 74 verre/métal comprenant deux électrodes métalliques 75a, 75b (électrodes principales). L'électrode 75a est soudée dans un trou du corps 77 de l'embase métallique 74, l'électrode 75b traverse cette dernière et elle en est isolée électriquement par un isolant 76 (du verre). Le corps métallique 77 de l'embase 64 est percé pour recevoir l'isolant 76 et l'électrode 75b. Un élément initiateur résistif tel un fil 78 ou une plaquette de semi conducteur est fixé sur l'extérieur du corps 77 et relie électriquement les électrodes 75a, 75b

Le corps 77 est fixé au godet 73 par exemple par soudure laser et la première composition pyrotechnique 72 se trouve en contact avec l'élément résistif 78.

Une telle structure est classique et elle est décrite notamment par le brevet FR2720493.

Conformément à l'invention le godet 73 est isolé électriquement de l'étui 71 par une bague isolante 79, par exemple en matière plastique.

Conformément à l'invention un moyen écran est ici constitué par un tube 80 monté coulissant dans l'étui 71 et qui obture en position de sécurité (figure 7a) les trous radiaux 97.

Le tube 80 est maintenu appliqué par un premier ressort de compression 81 contre un moyen de verrouillage qui est constitué par une douille cylindrique fendue 82 dont une extrémité est en butée contre un premier lamage interne 83 de l'étui 71.

La douille 82 est réalisée par exemple en acier à ressort. Elle est fendue et entoure une première portée cylindrique 84 d'une tige de verrouillage 85.

La tige 85 comporte une deuxième portée cylindrique 86 de diamètre inférieur à celui de la première.

Les diamètres des portées 84,86 et la géométrie de la douille 82 sont choisis de telle sorte que la douille 82 se trouve contrainte à l'état ouvert lorsqu'elle se trouve sur la portée 84 et qu'elle se referme de par son élasticité pour adopter le diamètre de la deuxième portée 86 lorsque l'on déplace la tige 85.

La tige 85 comprend un noyau conducteur 87 qui est entouré par un corps isolant 88 sur lequel sont aménagées les portées 84,86.

La tige 85 est poussée dans sa position de verrouillage de la douille par un deuxième ressort de compression 89 (métallique) qui prend appui d'un côté sur le godet 73 et de l'autre sur le corps isolant 88. Le ressort 89 entoure un prolongement arrière 90 du noyau 87. L'ajustement du ressort 89 sur ce prolongement arrière est légèrement serré. Ainsi il y a une continuité électrique entre le godet 73 et lé noyau 87 par l'intermédiaire du ressort 89.

Dans la position de sécurité représentée à la figure 7a la tige 85 se trouve, poussée par le ressort 89, en butée contre un deuxième lamage interne 91 de l'étui.

Une partie avant de la tige 85 porte une coupelle métallique cylindrique 92 qui est isolée électriquement du noyau 87 et qui est en contact électrique avec le corps de l'étui 71.

Cette coupelle 92 constitue une première électrode, dite de sécurité, tandis que le noyau 87 constitue une deuxième électrode de sécurité. Un élément résistif 93, tel un fil ou une plaquette de semi conducteur, est disposé entre ces deux électrodes de sécurité.

Une deuxième composition pyrotechnique 94 recouvre cet élément résistif 93.

On pourra par exemple déposer sur l'élément résistif 93 quelques grammes d'une composition pyrotechnique oxydoréductrice sous la forme d'une goutte solidifiée, par exemple par ultraviolets.

Enfin l'étui 71 est fermé au niveau de sa partie arrière par un bouchon 95 métallique soudé au corps de l'étui 71, par exemple par laser. Une rondelle isolante 96 est interposée entre le bouchon 95 et le corps 77 et le godet 73.

On notera que le positionnement axial par rapport à l'étui 71 de l'initiateur principal formé du corps 77 portant le godet 73 est assuré par l'appui d'un repli 98 de la bague isolante 79 sur un lamage interne 99 de l'étui.

Le fonctionnement d'un tel initiateur est le suivant.

Il est disposé dans un système de sécurité classique et il est relié aux moyens électroniques assurant le pilotage de la sécurité pyrotechnique du véhicule.

L'initiateur selon l'invention comporte donc deux compositions pyrotechniques 72 et 94 qui peuvent être initiées, la première (72) par un courant circulant entre les électrodes principales 75a,75b, la deuxième (94) par un courant circulant entre les électrodes de sécurité 92 et 87, c'est à dire entre l'électrode 75a (qui est reliée à l'électrode 87 par l'intermédiaire du godet 73 et du ressort 89) et l'étui 71 lui même qui est relié à l'électrode 92.

Si une initiation intempestive de la composition principale 72 intervient lorsque le dispositif se trouve dans sa position de sécurité représentée à la figure 7a, le tube 80 obture les trous 97. Les gaz engendrés par la composition ne peuvent sortir du composant et restent confinés à l'intérieur de l'étui 71 dont l'épaisseur et le matériau seront choisis de façon à assurer un tel confinement. On pourra par exemple réaliser un étui en 0,5 mm d'acier.

Un tel composant permet donc d'éviter les pertes de contrôle du véhicule qui résulteraient d'une initiation intempestive d'un dispositif de sécurité en dehors de tout contexte d'accident.

Si l'électronique de commande souhaite déclencher l'initiateur afin d'assurer le déploiement d'une protection, un ordre de mise à feu sera envoyé à la deuxième composition pyrotechnique 94 quelques millisecondes avant l'envoi de l'ordre de mise à feu à la première composition.

Les gaz engendrés par l'initiation de la deuxième composition 94 ont pour effet de pousser la tige 85 en arrière contre l'action du ressort 89. La douille 82 étant par ailleurs bloquée axialement par le ressort 81, un tel recul de la tige 85 a pour effet de positionner la deuxième portée cylindrique 86 en regard de la douille élastique 82. Un tel positionnement a pour effet de libérer la douille 82 qui adopte élastiquement le diamètre de la deuxième portée 86 et libère ainsi le tube écran 80.

Le ressort pousse alors le tube 80 jusqu'en butée contre le premier lamage 83 ce qui dégage les trous 97. Le composant se trouve alors dans sa position armée représentée à la figure 7b.

Les trous 97 sont dégagés et l'initiation de la première composition 72 permettra de déclencher le système pyrotechnique de protection.

Différentes variantes sont possibles pour les différents modes décrits précédemment sans sortir du cadre de l'invention. Il est ainsi possible comme cela a été précisé précédemment de choisir différents types d'actionneurs suivant le but recherché. On pourra mettre en oeuvre des actionneurs électromagnétiques, des micro moteurs électriques, des actionneurs pneumatiques ou faisant intervenir un ressort à mémoire de forme.

Il est également possible de donner aux volets d'obturation des géométries différentes. On pourra notamment mettre en oeuvre un volet parallélépipédique circulant dans un logement complémentaire.

On pourra pour chaque mode de réalisation choisir, soit de confiner les gaz de l'initiateur à l'intérieur du dispositif, soit choisir de les évacuer à distance du dispositif.

Dans tous les cas lorsque des trous d'évacuation des gaz sont prévus, on prévoira au niveau des logements d'installation dans le véhicule, des canaux permettant de conduire ces gaz à distance du conducteur. Ils pourront ainsi, pour un générateur monté sur un volant, être canalisés vers le tableau de bord ou le tablier frontal du véhicule.

On pourra enfin combiner la sécurité pyrotechnique faisant l'objet de la présente demande avec une sécurité électrique. On pourra par exemple prévoir que le déplacement du moyen écran mobile de sa position armée à sa position de sécurité assure également la mise en place d'un court circuit aux bornes de l'initiateur. Il suffit pour cela de prévoir un interrupteur qui soit actionné mécaniquement par le déplacement de l'écran mobile. Une telle variante aura pour avantage d'isoler électriquement la pyrotechnie contenue dans l'initiateur.

## Revendications

1. Dispositif (1) de sécurité pyrotechnique pour véhicule, comprenant au moins un initiateur pyrotechnique (4,1a) destiné à être relié à au moins un générateur de gaz (5), dispositif ***caractérisé en ce qu'****il* comprend un moyen écran mobile (22,51,80) interposé entre l'initiateur (4,1a) et le générateur de gaz, moyen écran susceptible d'occuper au moins deux positions, une position armée dans laquelle les gaz chauds produits par l'initiateur peuvent agir sur le générateur et une position de sécurité dans laquelle le moyen écran interdit le passage des gaz de l'initiateur au générateur de gaz, le passage d'une position à l'autre étant commandé par un moyen actionneur (A,B,54,61a,61b,81).

2. Dispositif de sécurité selon la revendication 1, **caractérisé en ce que** le moyen écran (22,51,80) permet de diriger dans sa position de sécurité les gaz chaud à l'extérieur du dispositif de sécurité (1) et à distance du générateur de gaz (5).

3. Dispositif de sécurité selon une des revendications 1 ou 2, **caractérisé en ce qu'**il comporte une cuvette interne (15) qui est interposée entre le générateur de gaz (5) et l'écran (22,51), cuvette délimitant un volume interne recevant l'écran et au moins partiellement l'initiateur, cuvette interne présentant au moins un trou (18,20) permettant de relier l'initiateur (4) et le générateur de gaz (5), trou pouvant être obturé par l'écran (22,51) lorsqu'il se trouve dans sa position de sécurité.

4. Dispositif de sécurité selon la revendication 3, **caractérisé en ce que** l'écran (22) est constitué par une coupelle cylindrique qui est montée rotative sur une embase cylindrique (23) supportant l'initiateur (4), coupelle portant au moins un trou (24,25) susceptible de coopérer avec le trou (18,20) porté par la cuvette interne (15).

5. Dispositif de sécurité selon la revendication 4, **caractérisé en ce que** l'écran (22) porte au moins un deuxième trou (30) qui coopère avec une ouverture (31) portée par l'embase (23) et qui se trouve obturé par l'embase (23) lorsque l'écran (22) se trouve en position armée et en regard de l'ouverture (31) de l'embase (23) lorsque l'écran (22) se trouve en position de sécurité.

6. Dispositif de sécurité selon la revendication 5, **caractérisé en ce que** la cuvette interne (15) délimite avec l'écran (22) une chambre annulaire (34) qui reçoit les gaz chaud engendrés par l'initiateur (4) lorsque l'écran se trouve en position de sécurité.

7. Dispositif de sécurité selon la revendication 6, **caractérisé en ce que** la chambre annulaire (34) communique avec l'extérieur du dispositif par au moins un canal (36).

8. Dispositif de sécurité selon une des revendications 4 à 7, **caractérisé en ce que** l'écran (22) est prolongé par une jupe (40) et **en ce que** les moyens actionneurs permettant de commander la rotation de l'écran comprennent un moyen d'entraînement (42) pouvant se translater dans un logement (43) suivant un axe perpendiculaire à celui de la jupe de l'écran, moyen d'entraînement coopérant lors de sa translation avec une partie de la jupe (40) de façon à entraîner celle ci en rotation.

9. Dispositif de sécurité selon la revendication 8, **caractérisé en ce que** la jupe (40) porte une lumière (41) sur laquelle prend appui le moyen d'entraînement (42) de façon à entraîner celle ci.

10. Dispositif de sécurité selon la revendication 9, **caractérisé en ce que** le moyen d'entraînement est constitué par au moins une bille (42) qui est poussée par les gaz engendrés par un composant pyrotechnique (45).

11. Dispositif de sécurité selon la revendication 3, **caractérisé en ce que** l'écran est constitué par un fourreau cylindrique (51) qui peut se translater par rapport à la cuvette interne (15) de façon à obturer ou dégager le ou les trous (20) portés par celle ci.

12. Dispositif de sécurité selon la revendication 11, **caractérisé en ce qu'**il comporte une cuvette externe (53), les deux cuvettes interne (15) et externe (53) délimitant une cavité à l'intérieur de laquelle peut se translater l'écran (51).

13. Dispositif de sécurité selon la revendication 12, **caractérisé en ce que** la cuvette externe (53) porte au moins un trou (56) qui se trouve, lorsque l'écran (51) se trouve en position de sécurité, en regard d'au moins un perçage complémentaire (57) aménagé sur le fourreau, trou qui se trouve obturé lorsque l'écran se trouve en position armée.

14. Dispositif de sécurité selon une des revendications 11 à 13, **caractérisé en ce que** l'écran (51) comporte une embase (52) sur laquelle est fixé l'initiateur (4).

15. Dispositif de sécurité selon la revendication 14, **caractérisé en ce que** le moyen actionneur comprend un ressort de compression (54).

16. Dispositif de sécurité selon la revendication 15, **caractérisé en ce que** le ressort de compression (54) est disposé autour de la cuvette externe (53), entre une collerette (55) solidaire de l'embase et une surface d'appui plane.

17. Dispositif de sécurité selon la revendication 15, **caractérisé en ce que** le ressort de compression (54) est disposé à l'intérieur de la cuvette externe (53) et autour de l'embase (52), le ressort se trouvant comprimé entre un épaulement de l'embase et la cuvette externe lorsque le dispositif se trouve dans sa position armée et au moins partiellement détendu lorsque le dispositif se trouve dans sa position de sécurité.

18. Dispositif de sécurité selon la revendication 17, **caractérisé en ce que** le moyen actionneur comprend au moins un doigt (61a,61b) solidaire de l'embase (52) et qui s'étend sensiblement parallèlement à celle-ci jusqu'à la cuvette interne (15), doigt qui se trouve automatiquement enfoncé lors du montage du dispositif (1) par son appui sur une surface butée (64), ce qui assure le passage de l'écran (51) de sa position de sécurité à sa position armée.

19. Dispositif de sécurité selon la revendication 15, **caractérisé en ce que** le ressort (54) est disposé à l'intérieur du fourreau (51) de l'écran et prend appui entre la cuvette interne (15) et l'embase (52), le ressort se trouvant à l'état comprimé lorsque le dispositif se trouve dans sa position de sécurité et au moins partiellement détendu lorsque le dispositif passe en position armée, le passage d'une position à l'autre étant commandé par un moyen de déverrouillage (68).

20. Dispositif de sécurité selon la revendication 19, **caractérisé en ce que** le moyen de déverrouillage comprend un composant pyrotechnique (65).

21. Dispositif de sécurité selon la revendication 1, **caractérisé en ce que** il est constitué par un seul composant initiateur (1), composant comprenant un étui (71) à l'intérieur duquel est disposée une première composition pyrotechnique (72) qui est destinée à assurer l'initiation d'un générateur de gaz au travers d'au moins un trou radial (97), le moyen écran étant constitué par un tube (80) coulissant dans l'étui (71) et obturant en position de sécurité le ou les trous radiaux (97), le moyen actionneur comprenant un ressort (81) disposé dans l'étui (71) et qui se trouve à l'état comprimé dans la position de sécurité, le tube (80) étant alors immobilisé par un moyen de verrouillage (82) dont la libération par des moyens de commande provoque le passage du tube de la position de sécurité à la position armée.

22. Dispositif de sécurité selon la revendication 21, **caractérisé en ce que** le moyen de verrouillage est constitué par une douille cylindrique fendue (82) qui forme une butée axiale entre le tube (80) et un épaulement interne (83) de l'étui (71), douille réalisée en un matériau élastique et entourant une première portée cylindrique (84) d'une tige de verrouillage (85) qui maintient la douille (82) dans une position ouverte, la tige (85) comportant une deuxième portée cylindrique (86) de diamètre inférieur à celui de la première, le déplacement de la tige permettant de positionner la deuxième portée cylindrique (86) en regard de la douille (82), ce qui a pour effet de libérer la douille qui adopte élastiquement le diamètre de cette deuxième portée et libère ainsi le tube (80).

23. Dispositif de sécurité selon la revendication 22, **caractérisé en ce que** la tige (85) est poussée dans sa position de verrouillage de la douille (82) par un ressort de compression (89).

24. Dispositif de sécurité selon la revendication 23, **caractérisé en ce que** la tige (85) porte une deuxième composition pyrotechnique (94) dont l'initiation permet de commander la translation de la tige (85), donc la libération de la douille (82), ce qui conduit au passage du dispositif à sa position armée.

25. Dispositif de sécurité selon la revendication 24, **caractérisé en ce que** la première composition pyrotechnique (72) est initiée par au moins deux électrodes principales (75a,75b), l'une reliée électriquement à un godet métallique (73) entourant la première composition (72) et l'autre étant isolée de ce godet, le godet étant isolé électriquement de l'étui (71) par une bague (79).

26. Dispositif de sécurité selon la revendication 25, **caractérisé en ce que** la tige (85) comprend un noyau conducteur (87) entouré par un corps isolant (88), la deuxième composition pyrotechnique (94) étant initiée par deux électrodes (92,87) dites de sécurité, la première étant reliée électriquement au corps métallique externe de l'étui (71) et la deuxième étant reliée électriquement au godet (73) entourant la première composition (72) par l'intermédiaire du noyau conducteur (87) et du ressort de compression (89) qui prend appui sur le godet (73) et entoure une extrémité (90) du noyau (87).

27. Dispositif de sécurité selon la revendication 26, **caractérisé en ce que** la première électrode de sécurité (92) se trouve dans la position de sécurité en contact avec une surface cylindrique interne de l'étui (71).

## Patentansprüche

1. Pyrotechnische Sicherheitsvorrichtung (1) für ein Fahrzeug, die wenigstens einen pyrotechnischen Initiator (4, 1a) umfasst, der dafür vorgesehen ist, mit wenigstens einem Gaserzeuger (5) verbunden zu werden, wobei die Vorrichtung ***dadurch gekennzeichnet ist, dass*** sie ein bewegliches Schirmmittel (22, 51, 80) umfasst, das zwischen dem Initiator (4, 1a) und dem Gaserzeuger eingefügt ist, wobei das Schirmmittel dafür geeignet ist, wenigstens zwei Positionen einzunehmen, eine scharfe Position, in welcher die vom Initiator erzeugten heißen Gase auf den Erzeuger einwirken können und eine gesicherte Position, in welcher das Schirmmittel den Durchgang der Gase des Initiator zum Gaserzeuger untersagt, wobei der Übergang von einer Position zur Anderen durch ein Stellmittel (A, B, 54, 61a, 61b, 81) gesteuert wird.

2. Sicherheitsvorrichtung nach Anspruch 1, **dadurch gekennzeichnet, dass** das Schirmmittel (22, 51, 80) es ermöglicht, die heißen Gase in seiner gesicherten Position aus der Sicherheitsvorrichtung (1) und beabstandet vom Gaserzeuger (5) zu leiten.

3. Sicherheitsvorrichtung nach einem der Ansprüche 1 oder 2, **dadurch gekennzeichnet, dass** sie ein inneres Gefäß (15) umfasst, das zwischen dem Gaserzeuger (5) und dem Schirm (22, 51) eingefügt ist, wobei das Gefäß ein inneres Volumen abgrenzt, welches den Schirm und wenigstens teilweise den Initiator aufnimmt, wobei das innere Gefäß wenigstens ein Loch (18, 20) umfasst, das es ermöglicht, den Initiator (4) und den Gaserzeuger (5) zu verbinden, wobei das Loch durch den Schirm (22, 51) verschlossen werden kann, wenn sie sich in ihrer gesicherten Position befindet.

4. Sicherheitsvorrichtung nach Anspruch 3, **dadurch gekennzeichnet, dass** der Schirm (22) durch ein zylindrisches Schälchen gebildet wird, das an einem den Initiator (4) tragenden zylindrischen Ansatz (23) drehbar befestigt ist, wobei das Schälchen wenigstens ein Loch (24, 25) trägt, das geeignet ist, mit dem durch das innere Gefäß (15) getragene Loch (18, 20) zusammen zu wirken.

5. Sicherheitsvorrichtung nach Anspruch 4, **dadurch gekennzeichnet, dass** der Schirm (22) wenigstens ein zweites Loch (30) trägt, welches mit einer Öffnung (31) zusammenwirkt, die vom Ansatz (23) getragen wird und die vom Ansatz (23) verschlossen wird, wenn der Schirm (22) sich in scharfer Position befindet, und die der Öffnung (31) des Ansatzes (23) gegenüber liegt, wenn der Schirm (22) sich in gesicherter Position befindet.

6. Sicherheitsvorrichtung nach Anspruch 5, **dadurch gekennzeichnet, dass** das innere Gefäß (15) mit dem Schirm (22) einen ringförmigen Raum (34) abgrenzt, welcher die vom Initiator (4) erzeugten heißen Gase aufnimmt, wenn sich der Schirm in der gesicherten Position befindet.

7. Sicherheitsvorrichtung nach Anspruch 6, **dadurch gekennzeichnet, dass** der ringförmige Raum (34) durch wenigstens einen Kanal (36) mit dem äußeren Bereich der Vorrichtung in Verbindung steht.

8. Sicherheitsvorrichtung nach einem der Ansprüche 4 bis 7, **dadurch gekennzeichnet, dass** der Schirm (22) durch eine Schürze (40) verlängert ist, und dass die die Stellmittel, die die Drehung des Schirmes steuern, ein Antriebsmittel (42) umfassen, das sich in einer Ausnehmung (43) gemäß einer Achse, die senkrecht zu der der Schürze des Schirmes steht, verschieben kann, wobei das Antriebsmittel bei seiner Verschiebung mit einem Abschnitt der Schürze (40) derartig zusammenwirkt, dass diese in Drehung versetzt wird.

9. Sicherheitsvorrichtung nach Anspruch 8, **dadurch gekennzeichnet, dass** die Schürze (40) ein Langloch (41) trägt, in dem das Antriebsmittel (42) derartig zur Anlage kommt, dass es diese antreibt.

10. Sicherheitsvorrichtung nach Anspruch 9, **dadurch gekennzeichnet, dass** das Antriebsmittel aus wenigstens einer Kugel (42) gebildet wird, die durch die von einer pyrotechnischen Komponente (45) erzeugten Gase vorwärts getrieben wird.

11. Sicherheitsvorrichtung nach Anspruch 3, **dadurch gekennzeichnet, dass** der Schirm durch eine zylindrische Gleithülse (51) gebildet wird, die sich in Bezug auf das innere Gefäß (15) derartig verschieben kann, dass das oder die von ihm getragenen Löcher (20) verschlossen oder freigelegt werden.

12. Sicherheitsvorrichtung nach Anspruch 11, **dadurch gekennzeichnet, dass** sie ein äußeres Gefäß (53) umfasst, wobei das innere (15) und äußere (53) Gefäß jeweils einen Hohlraum abgrenzen, in dessen Inneren sich der Schirm (51) verschieben kann.

13. Sicherheitsvorrichtung nach Anspruch 12, **dadurch gekennzeichnet, dass** das äußere Gefäß (53) wenigstens ein Loch (56) trägt, welches sich, wenn sich der Schirm (51) in gesicherter Position befindet, gegenüber wenigstens einer komplementären, in der Gleithülse angeordneten Bohrung (57) befindet, wobei das Loch verschlossen ist, wenn sich der Schirm in scharfer Position befindet.

14. Sicherheitsvorrichtung nach einem der Ansprüche 11 bis 13, **dadurch gekennzeichnet, dass** der Schirm (51) einen Ansatz (52) umfasst, an dem der Initiator (4) befestigt ist.

15. Sicherheitsvorrichtung nach Anspruch 14, **dadurch gekennzeichnet, dass** das Stellmittel eine Druckfeder (54) enthält.

16. Sicherheitsvorrichtung nach Anspruch 15, **dadurch gekennzeichnet, dass** die Druckfeder (54) um das äußere Gefäß (53) herum zwischen einem fest mit dem Ansatz verbundenen Kragen (55) und einer glatten Anschlagfläche angeordnet ist.

17. Sicherheitsvorrichtung nach Anspruch 15, **dadurch gekennzeichnet, dass** die Druckfeder (54) im Inneren des äußeren Gefäßes (53) und um den Ansatz (52) herum angeordnet ist, wobei sich die Feder zwischen einer Schulter des Ansatzes und dem äußeren Gefäß zusammengedrückt befindet, wenn sich die Vorrichtung in ihrer scharfen Position befindet, und wenigstens teilweise entspannt, wenn sich die Vorrichtung in ihrer gesicherten Position befindet.

18. Sicherheitsvorrichtung nach Anspruch 17, **dadurch gekennzeichnet, dass** das Stellmittel wenigstens einen Finger (61a, 61b) umfasst, der fest mit dem Ansatz (52) verbunden ist und der sich nahezu parallel zu Diesem bis zum inneren Gefäß (15) erstreckt, wobei der Finger bei der Montage der Vorrichtung (1) durch seine Anlage an der Anschlagfläche (64) fest angebracht ist, was den Übergang des Schirms (51) von seiner gesicherten Position in seine scharfe Position gewährleistet.

19. Sicherheitsvorrichtung nach Anspruch 15, **dadurch gekennzeichnet, dass** die Feder (54) im Inneren der Gleithülse (51) des Schirms angeordnet ist und sich zwischen dem inneren Gefäß (15) und dem Ansatz (52) abstützt, wobei sich die Feder im zusammengedrückten Zustand befindet, wenn sich die Vorrichtung in ihrer gesicherten Position befindet, und teilweise entspannt, wenn die Vorrichtung in die scharfe Position übergeht, wobei der Übergang von einer in die andere Position durch ein Mittel (68) zum Entriegeln gesteuert wird.

20. Sicherheitsvorrichtung nach Anspruch 19, **dadurch gekennzeichnet, dass** das Mittel zum Entriegeln eine pyrotechnische Komponente (65) umfasst.

21. Sicherheitsvorrichtung nach Anspruch 1, **dadurch gekennzeichnet, dass** sie durch eine einzige Initiatorkomponente (1) gebildet wird, wobei die Komponente eine Hülle (71) umfasst, in deren Inneren eine erste pyrotechnische Zusammensetzung (72) angeordnet ist, welche dafür vorgesehen ist, die Initiierung des Gaserzeugers mit Hilfe wenigstens eines radialen Lochs (97) zu gewährleisten, wobei das Schirmmittel durch ein Rohr (80) gebildet wird, welches in der Hülle (71) gleitet und in gesicherter Position das oder die Radiallöcher (97) verschließt, wobei das Stellmittel eine Feder (81) umfasst, die in der Hülle (71) angeordnet ist und sich im zusammengedrückten Zustand in der gesicherten Position befindet, wobei das Rohr (80) nun durch ein Verriegelungsmittel (82) festgesetzt wird, deren Freisetzung durch Steuermittel den Übergang des Rohres von der gesicherten Position zur scharfen Position bewirkt.

22. Sicherheitsvorrichtung nach Anspruch 21, **dadurch gekennzeichnet, dass** das Verriegelungsmittel durch eine zylindrische, geschlitzte Hülse (82) gebildet wird, die einen axialen Anschlag zwischen dem Rohr (80) und einer inneren Schulter (83) der Hülle (71) bildet, wobei die Hülse aus einem elastischen Material ausgeführt ist und eine erste zylindrische Fläche (84) einer Verriegelungsstange (85) umgibt, welche die Hülse (82) in einer offenen Stellung festhält, wobei die Stange (85) eine zweite zylindrische Fläche (86) mit kleinerem Durchmesser als der der Ersten aufweist, wobei es die Verschiebung der Stange erlaubt, die zweite zylindrische Fläche (86) gegenüber der Hülse (82) zu positionieren, was zur Folge hat, dass die Hülse freigesetzt wird, die elastisch den Durchmesser dieser zweiten Fläche annimmt und so das Rohr (80) freigibt.

23. Sicherheitsvorrichtung nach Anspruch 22, **dadurch gekennzeichnet, dass** die Stange (85) in ihre Position zum Verriegeln der Hülse (82) durch eine Druckfeder (89) gerückt wird.

24. Sicherheitsvorrichtung nach Anspruch 23, **dadurch gekennzeichnet, dass** die Stange (85) eine zweite pyrotechnische Zusammensetzung (94) trägt, deren Initiierung es ermöglicht, die Verschiebung der Stange (85), somit die Freisetzung der Hülse (82), zu steuern, was zum Übergang der Vorrichtung in ihre scharfe Position führt.

25. Sicherheitsvorrichtung nach Anspruch 24, **dadurch gekennzeichnet, dass** die erste pyrotechnische Zusammensetzung (72) durch wenigstens zwei Hauptelektroden (75a, 75b) initiiert wird, wobei die Eine elektrisch mit einem Metallbecher (73) verbunden ist, der die erste Zusammensetzung (72) umgibt, und die Andere gegenüber diesem Becher isoliert ist, wobei der Becher durch einen Ring (79) gegenüber der Hülle (71) elektrisch isoliert ist.

26. Sicherheitsvorrichtung nach Anspruch 25, **dadurch gekennzeichnet, dass** die Stange (85) einen Kernleiter (87) umfasst, der von einem Isolator (88) umgeben ist, wobei die zweite pyrotechnische Zusammensetzung (94) durch zwei so genannte Sicherheitselektroden (92, 87) initiiert wird, wobei die Erste mit dem äußeren Metallkörper der Hülle (71) elektrisch verbunden ist und die Zweite mit dem die erste Zusammensetzung (72) umgebenden Becher (73) Mittels des Kernleiters (87) und der Druckfeder (89), die sich auf dem Becher (73) abstützt und ein Ende (90) des Kerns (87) umgibt, elektrisch verbunden ist.

27. Sicherheitsvorrichtung nach Anspruch 26, **dadurch gekennzeichnet, dass** die erste Sicherheitselektrode (92) sich in der gesicherten Position in Kontakt mit einer inneren zylindrischen Fläche der Hülle (71) befindet.

## Claims

1. A pyrotechnic safety device (1) for a vehicle, comprising at least one pyrotechnic igniter (4, 1a) intended to be connected to at least one gas generator (5), such device ***characterised in that*** it comprises mobile screen means (22, 51, 80) placed between the igniter (4, 1a) and the gas generator, such screen means able to occupy at least two positions, an armed position in which the hot gases produced by the igniter may act on the generator and a safety position in which the screen means prevent the gases from passing from the igniter to the gas generator, the passage from one position to the other being controlled by actuating means (A, B, 54, 61a, 61b, 81).

2. A safety device according to Claim 1, **characterised in that** the screen means (22, 51, 80) in their safety position allow the hot gases to be directed outside the safety device (1) and away from the gas generator (5).

3. A safety device according to one of Claims 1 or 2, **characterised in that** it incorporates an internal concavity (15) that is positioned between the gas generator (5) and the screen (22, 51), concavity delimiting and internal volume receiving the screen and at least partially the igniter, such internal concavity having at least one hole (18, 20) to allow the igniter (4) and gas generator (5) to be connected, such hole able to be blocked by the screen (22, 51) when in its safety position.

4. A safety device according to Claim 3, **characterised in that** the screen (22) is constituted by a cylindrical cup mounted able to rotate on a cylindrical base (23) supporting the igniter (4), such cup having at least one hole (24, 25) able to co-operate with the hole (18, 20) made in the internal concavity (15).

5. A safety device according to Claim 4, **characterised in that** the screen (22) has at least a second hole (30) that cooperates with an opening (31) made in the base (23) and which is blocked by the base (23) when the screen (22) is in the armed position and opposite the opening (31) of the base (23) when the screen (22) is in the safety position.

6. A safety device according to Claim 5, **characterised in that** the internal concavity (15) and the screen (22) together delimit an annular chamber (34) that receives the hot gases generated by the igniter (4) when the screen is in the safety position.

7. A safety device according to Claim 6, **characterised in that** the annular chamber (34) communicates with the device's exterior by at least one channel (36).

8. A safety device according to one of Claims 4 to 7, **characterised in that** the screen (22) is prolonged by a skirt (40) and the actuating means allowing the screen's rotation to be controlled comprise drive means (42) able to translate in a housing (43) along a perpendicular axis to that of the screen skirt, drive means co-operating in their translation with part of the skirt (40) so as to drive it in rotation.

9. A safety device according to Claim 8, **characterised in that** the skirt (40) incorporates a slot (41) onto which the drive means (42) press thereby driving it.

10. A safety device according to Claim 9, **characterised in that** the drive means are constituted by at least one ball (42) that is pushed by the gases generated by a pyrotechnic component (45).

11. A safety device according to Claim 3, **characterised in that** the screen is constituted by a cylindrical sheath (51) able to translate with respect to the internal concavity (15) so as to block or release the hole or holes (20) in it.

12. A safety device according to Claim 11, **characterised in that** it incorporates an external concavity (53), the two internal (15) and external (53) concavities delimiting a cavity inside which the screen (51) may translate.

13. A safety device according to Claim 12, **characterised in that** the external concavity (53) has at least one hole (56) that, when the screen (51) is in the safety position, is opposite at least one matching drill hole (57) made in the sheath, such hole being blocked when the screen is in the armed position.

14. A safety device according to one of Claims 11 to 13, **characterised in that** the screen (51) incorporates a base (52) onto which the igniter (4) is fastened.

15. A safety device according to Claim 14, **characterised in that** the actuating means comprise a compression spring (54).

16. A safety device according to Claim 15, **characterised in that** the compression spring (54) is positioned around the external concavity (53), between a collar (55) integral with the base and a plane bearing surface.

17. A safety device according to Claim 15, **characterised in that** the compression spring (54) is placed inside the external concavity (53) and around the base (52), the spring being compressed between a shoulder on the base and the external concavity when the device is in its armed position and at least partially slackened when the device is in the safety position.

18. A safety device according to Claim 17, **characterised in that** the actuating means comprise at least one finger (61a, 61b) integral with the base (52) and which extends substantially in parallel to it up to the internal concavity (15), such finger being automatically pushed in when the device (1) is assembled by its pressing on an abutted surface (64), thereby ensuring the screen (51) moves from its safety to its armed position.

19. A safety device according to Claim 15, **characterised in that** the spring (54) is placed inside the screen sheath (51) and presses between the internal concavity (15) and the base (52), the spring being in the compressed state when the device is in its safety position and at least partially slackened when the device moves into its armed position, the passage from one position to another being controlled by unlocking means (68).

20. A safety device according to Claim 19, **characterised in that** the unlocking means comprise a pyrotechnic component (65).

21. A safety device according to Claim 1, **characterised in that** it is constituted by a single igniting component (1), such component comprising a case (71) inside which a first pyrotechnic composition (72) is placed intended to ensure the ignition of a gas generator through at least one radial hole (97), the screen means being constituted by a tube (80) sliding in the case (71) and blocking the radial hole or holes (97) in the safety position, the actuating means comprising a spring (81) placed in the case (71) and which is in its compressed state in the safety position, the tube (80) being thus immobilised by locking means (82) whose release by the control means will cause the tube to move from its safety to its armed position.

22. A safety device according to Claim 21, **characterised in that** the locking means are constituted by a split cylindrical bush (82) forming an axial abutment between the tube (80) and an internal shoulder (83) of the case (71), the bush being made of an elastic material enclosing a first cylindrical seat (84) of a locking rod (85) that holds the bush (82) in an open position, the rod (85) comprising a second cylindrical seat (86) of a smaller diameter than the previous one, the rod's displacement allows the second cylindrical seat (86) to be position opposite the bush (82), thereby releasing the bush which elastically takes up the diameter of this second seat thereby releasing the tube (80).

23. A safety device according to Claim 22, **characterised in that** the rod (85) is pushed into its bush (82) locking position by a compression spring (89).

24. A safety device according to Claim 23, **characterised in that** the rod (85) carries a second pyrotechnic composition (94) whose ignition will allow the translation of the rod (85) to be controlled, and, by the way, the release of the bush (82), allowing the device to move into its armed position.

25. A safety device according to Claim 24, **characterised in that** the first pyrotechnic composition (72) is ignited by at least two main electrodes (75a, 75b), one electrically connected to a metallic cup (73) enclosing the first composition (72) and the other being insulated from this cup, the cup being electrically insulated from the case (71) by a ring (79).

26. A safety device according to Claim 25, **characterised in that** the rod (85) comprises a conductive core (87) surrounded by an insulating body (88), the second pyrotechnic composition (94) being ignited by two so-called safety electrodes (92, 87), the first being electrically connected to the external metallic body of the case (71) and the second being electrically connected to the cup (73) enclosing the first composition (72) by means of the conductive core (87) and the compression spring (89) that presses on the cup (73) and surrounds one end (90) of the core (87).

27. A safety device according to Claim 26, **characterised in that** the first safety electrode (92) is, in the safety position, in contact with an internal cylindrical surface of the case (71).
